# EUROPEAN PATENT SPECIFICATION

(11) **EP 3 012 431 B1**
(45) Date of publication and mention of the grant of the patent: **22.11.2017**
(21) Application number: 14189755.3
(22) Date of filing: 21.10.2014
(51) Int. Cl.: F02B 19/10, F02M 21/02, F02B 19/12

(54) **Pre-combustion chamber assembly for internal combustion engines**
Vorverbrennungskammeranordnung für Verbrennungsmotoren
Ensemble chambre de précombustion pour moteurs à combustion interne

(43) Date of publication of application: 27.04.2016
(73) Proprietor: Caterpillar Energy Solutions GmbH, 68167 Mannheim (DE)
(72) Inventor: Maier, Thomas, 68309 Mannheim (DE)
(74) Representative: BRP Renaud & Partner mbB Rechtsanwälte Patentanwälte Steuerberater

(56) References cited:
- EP-A1- 2 787 192
- EP-A2- 2 735 717
- WO-A1-2006/043818
- JP-A- 2012 193 747
- JP-U- H0 465 922

## Description

### Technical Field

The present disclosure generally relates to a pre-combustion chamber assembly for internal combustion engines. The present disclosure further relates to an internal combustion engine, a pre-combustion chamber uppert part, and a pre-combustion chamber lower part.

### Background

Internal combustion engines running, for example, at least in part on gaseous fuel usually need an ignition device (also referred to as pre-combustion chamber assembly) to ignite the mixture of gaseous fuel and air. A pre-combustion chamber assembly including a pre-combustion chamber may have a spark plug partially protruding into the pre-combustion chamber. Such a pre-combustion chamber assembly may further include a fuel supply for supplying some amount of fuel into the pre-combustion chamber. Upon ignition of the air/fuel mixture within the pre-combustion chamber, the flames may advance through orifices provided in the pre-combustion chamber into the main combustion chamber, where the flames may ignite the main amount of fuel and air for operating the internal combustion engine.

US 8,028,674 B2 discloses a fuel processor apparatus and method. A fuel nozzle includes at least one port for receiving fuel, a sidewall forming ports for introducing fuel into a pre-combustion chamber, and a plurality of conduits formed between the first end and the sidewall.

US 7,451,727 B2 discloses an engine comprising a working cylinder provided with a piston, a pre-ignition chamber provided with a spark plug, and a combustion chamber which are connected to a compressor cylinder by channels. The compressor cylinder is provided with fuel and air supplying channels arranged in the top section thereof and with a piston and shutoff valve.

Furthermore, JP H04 65922 U discloses a pre-chamber body including a spark plug. The pre-chamber body further includes a pre-chamber and a channel extending though an upper part of the pre-chamber body and opening into the pre-chamber.

The present disclosure is directed, at least in part, to improving or overcoming one or more aspects of prior systems.

### Summary of the Disclosure

According to an aspect of the present disclosure, a pre-combustion chamber assembly for an internal combustion engine according to claim 1 is disclosed.

According to another aspect of the present disclosure, an internal combustion engine may comprise at least one cylinder reciprocally receiving a piston, the at least one cylinder and the piston delimiting at least one main combustion chamber, and at least one pre-combustion chamber assembly according to the present disclosure. The at least one pre-combustion chamber assembly may at least partially protrude into the at least one main combustion chamber.

Other features and aspects of this disclosure will be apparent from the following description and the accompanying drawings.

### Brief Description of the Drawings

Fig. 1 is a diagrammatic cross-sectional view of an internal combustion engine with a pre-combustion chamber assembly installed in a cylinder head of the internal combustion engine;
Fig. 2 is a diagrammatic cross-sectional view of the cylinder head with an installed pre-combustion chamber assembly shown in greater detail;
Fig. 3 is a partial cut view of the pre-combustion chamber assembly of Fig. 2 including a pre-combustion chamber upper part according to an embodiment of the present disclosure;
Fig. 4 is a cross-sectional view of the pre-combustion chamber assembly of Fig. 3 taken along line IV - IV of Fig. 3;
Fig. 5 is a cross-sectional view of another pre-combustion chamber assembly; and
Fig. 6 is a partial cut view of the pre-combustion chamber assembly of Fig. 2 including pre-combustion chamber upper part according to another embodiment of the present disclosure.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that providing at least one fuel passage at an interface between a pre-combustion chamber upper part and a pre-combustion chamber lower part of a pre-combustion chamber assembly may support in reliably supplying fuel into a pre-combustion chamber of the pre-combustion chamber assembly. Providing the at least one fuel passage with a small diameter may further prevent flashback of flames generated within the pre-combustion chamber into a fuel supply channel of a fuel supply system upstream of the at least one fuel passage, since the at least one fuel passage may extinguish the flames. Particularly, the pre-combustion chamber part body including the at least one fuel passage may absorb flame heat thereby quenching the flames and, then, the flames may be extinguished. Since the flames may be extinguished in the at least one fuel passage, ignition of the remaining fuel within the fuel passages may be prevented which may lead to less generation of soot.

The present disclosure may be further based at least in part on the realization that providing a fuel accumulating chamber at least partially circumferentially extending about a longitudinal axis of the pre-combustion chamber may support in uniformly distributing the fuel about the circumference of the pre-combustion chamber. Hence, the fuel may be uniformly supplied into the pre-combustion chamber via the at least one fuel passage.

The present disclosure may be further based at least in part on the realization that disposing the at least one fuel passage in a skew manner with respect to a longitudinal axis of the pre-combustion chamber assembly may support in imparting a swirl into the air/fuel mixture within the pre-combustion chamber. The imparted swirl may support in mixing the injected fuel with the air/fuel mixture already present within the pre-combustion chamber.

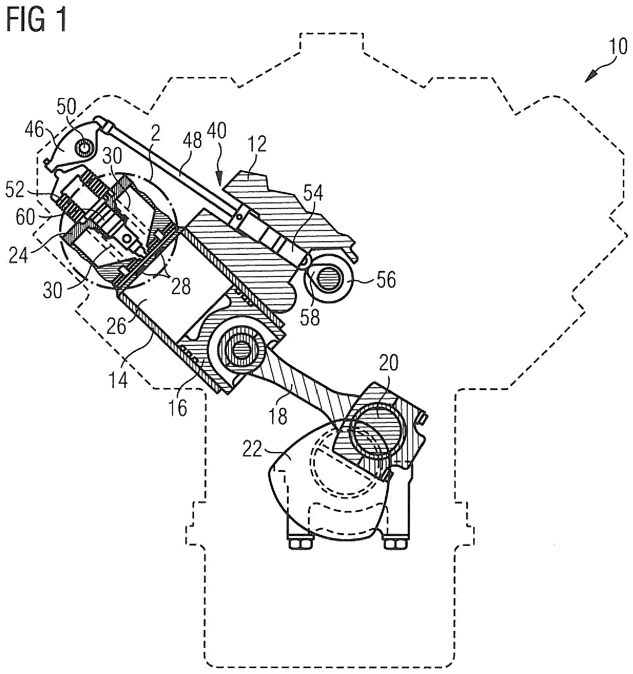

Referring now to the drawings, an exemplary embodiment of an internal combustion engine 10 is illustrated in Fig. 1. The internal combustion engine 10 may include features not shown, such as fuel systems, air systems, cooling systems, peripheries, drivetrain components, turbochargers, etc. For the purpose of the present disclosure, the internal combustion engine 10 is considered a four-stroke gaseous fuel internal combustion engine. One skilled in the art will recognize, however, that the gaseous fuel internal combustion engine 10 may be any type of engine (two-stroke, turbine, gas, diesel, natural gas, propane, etc.) that would utilize a pre-combustion chamber. Furthermore, the internal combustion engine 10 may be of any size, with any number of cylinders, and in any configuration ("V", in-line, radial, etc.). The internal combustion engine 10 may be used to power any machine or other device, including locomotive applications, on-highway trucks or vehicles, off-highway trucks or machines, earth moving equipment, generators, aerospace applications, marine applications, pumps, stationary equipment, or other engine powered applications.

The internal combustion engine 10 may include an engine block 12 having a plurality of cylinders 14 (one of which is illustrated in Fig. 1). A piston 16 may be slidably disposed within the cylinder (or cylinder liner) 14 to reciprocate between a top-dead-center position and a bottom-dead-center position. A connecting rod 18 may connect the piston 16 to an eccentric crankpin 20 of a crankshaft 22 such that reciprocating motion of the piston may result in rotation of the crankshaft 22.

The internal combustion engine 10 may also include a cylinder head 24 engaged with the engine block 12 to cover the cylinder 14, thereby delimiting a main combustion chamber 26. The cylinder head 24 may define intake and exhaust openings 28 that may allow intake gases into the main combustion chamber 26 and exhaust gases out of the main combustion chamber 26, respectively. Engine valves 30 may be positioned to selectively open and close the openings 28. Each cylinder 14 may include multiple intake and exhaust openings 28.

The internal combustion engine 10 may include a series of valve actuation assemblies 40 (one of which is illustrated in Fig. 1). The multiple valve actuation assemblies 40 may be provided per cylinder 14. For example, one valve actuation assembly may be used to open and close the intake valves and another valve actuation assembly may be provided to open and close the exhaust valves.

The valve actuation assembly 40 may include a rocker arm 46. The rocker arm 46 may be pivotally mounted in the cylinder head 24 and may attach to the engine valves 30 at one end and may attach to a push rod 48 at the other end. Oscillation of rocker arm 46 about its pivot point 50 may cause the valves 30 to move between an open position and a closed position. The valve actuation assembly 40 may also include valve springs 52 that may bias the valves 30 toward the closed position (i.e. closing the intake and exhaust openings 28).

The other end of the push rod 48 may engage a lifter 54 which may engage a camshaft 56. The camshaft 56 may operatively engage the crankshaft 22. The camshaft 56 may be connected with crankshaft 22 in any manner readily apparent to one skilled in the art where rotation of the crankshaft 22 may result in rotation of the camshaft 56. For example, camshaft 56 may be connected to crankshaft 22 through a gear train (not shown).

As shown in Fig. 1, a first cam lobe 58 may be disposed on the camshaft 56 to engage the lifter 54. One skilled in the art may recognize that the camshaft 56 may include additional cam lobes to engage with other lifters in order to actuate additional engine valves.

The internal combustion engine 10 may also include a pre-combustion chamber assembly 60 (also referred to as pre-combustion chamber ignition device), which is positioned within the cylinder head 24 between the valves 30. The pre-combustion chamber assembly 60 may be configured in a variety of ways. Any assembly capable of being positioned in the cylinder head 24 to support a combustion event outside of the main combustion chamber 26, and direct the combustion into the main combustion chamber 26 may be used.

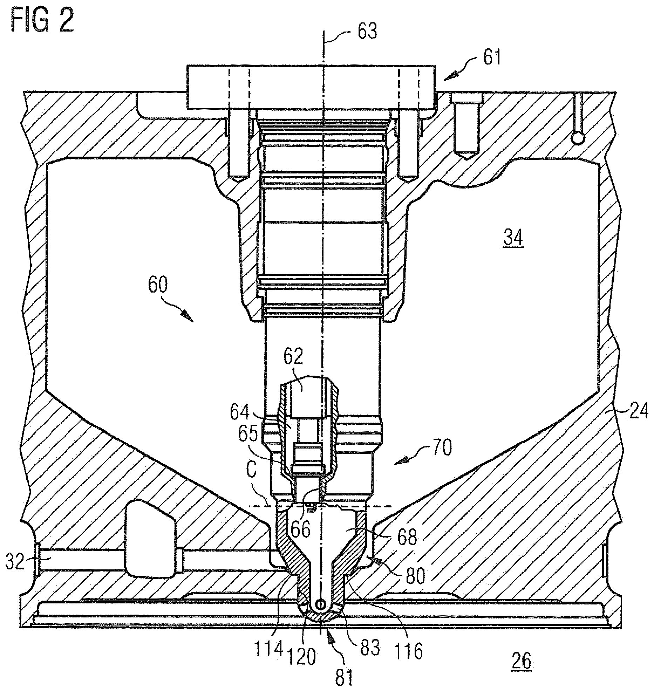

With reference to Fig. 2, the pre-combustion chamber assembly 60 of Fig. 1 is shown in greater detail. The pre-combustion chamber assembly 60 defining a longitudinal axis 63 may extend from the cylinder head 24 into the main combustion chamber 26. In the depicted embodiment, the pre-combustion chamber assembly 60 may comprise a pre-combustion chamber upper part 70 and a pre-combustion chamber lower part 80 detachably mounted to the pre-combustion chamber upper part 70. As illustrated in Fig. 2, the pre-combustion chamber upper part 70 is disposed above the pre-combustion chamber lower part 80. In Fig. 2, a separation between the pre-combustion chamber upper part 70 and the pre-combustion chamber lower part 80 is indicated by a dotted line C.

The pre-combustion chamber assembly 60 may be attached to the cylinder head 24 via, for example, a fastening device 61. In the assembled state, the fastening device 61 may at least partially press the pre-combustion chamber assembly 60 towards the main combustion chamber 26 (in Fig. 2 in a downward direction). On the opposite side, the pre-combustion chamber assembly 60 contacts a flange 114, such that the pre-combustion chamber upper and lower parts 70, 80 are at least partially compressed, thereby forming a robust device. In this state, the pre-combustion chamber upper and lower parts 70, 80 are relatively fixed to one another with respect to axial displacement and rotation. The pre-combustion chamber upper part 70 may be generally cylindrical and may be made of any suitable material.

The flange 114 may be sealed against the main combustion chamber 26. The flange 114 may extend transversely relative to the longitudinal axis 63 and may be provided to seal against a sealing surface 116 provided in the cylinder head 24 to prevent leakage between the main combustion chamber 26 and first and second cooling fluid passages 32, 34.

The pre-combustion chamber upper part 70 may be configured to accommodate a spark plug 62 therein such that a sparking end of the spark plug 62 at least partially protrudes into a pre-combustion chamber 68 provided within the pre-combustion chamber assembly 60. The spark plug 62 in the context of this invention may mean any suitable ignition device available in the art.

The pre-combustion chamber lower part 80 may be generally cylindrical and is mountable to the pre-combustion chamber upper part 70. Preferably, the pre-combustion chamber lower part 80 may be detachably mountable to the pre-combustion chamber upper part 70. This may allow replacing of, for example, the pre-combustion chamber lower part 80 by a new pre-combustion chamber lower part in the case of wear of the pre-combustion chamber lower part 80, especially in the case of wear of a pre-combustion chamber tip 81 or the orifices 83. For instance, after a usage time of, for example, about 15.000 hours of engine operation, the pre-combustion chamber lower part 80 may be replaced. The pre-combustion chamber lower part 80 may be cast to the general configuration and subsequently machined to final dimensions where required. In some embodiments, the pre-combustion chamber lower part 80 may be machined out of a solid material block. In some further embodiments, the pre-combustion chamber lower part 80 may be sintered, or manufactured in any other suitable way known in the art.

The pre-combustion chamber upper part 70 may have a stepped bore 64 that may be adapted to receive the spark plug 62. The stepped bore 64 may have a spark plug mounting bore 66 adapted to receive an end of the spark plug 62. The spark plug mounting bore 66 may include a thread adapted to mate with threads on the end of the spark plug 62. The stepped bore 64 may define a sealing surface 65 that may be adapted to sealingly contact the spark plug 62.

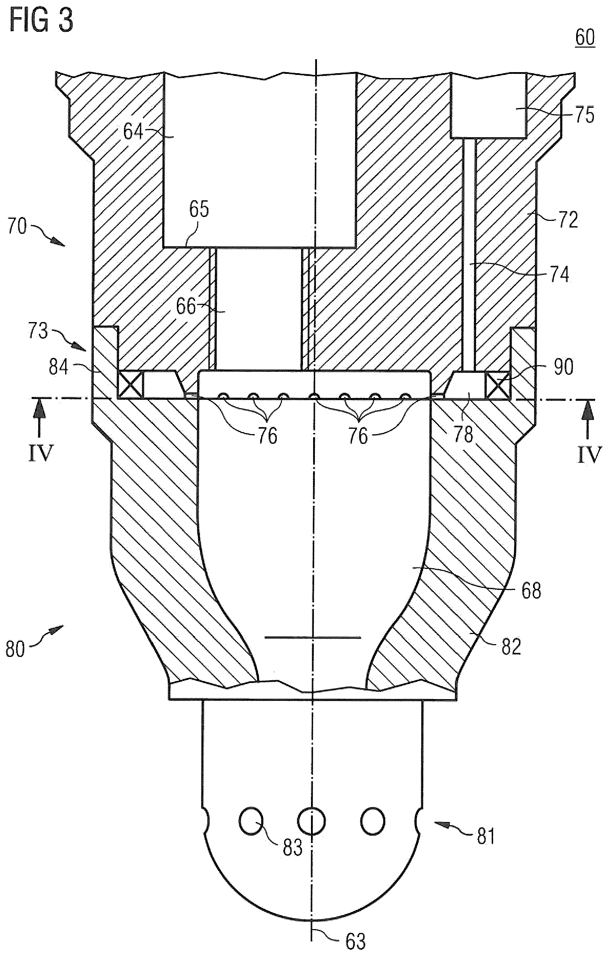

Referring to Fig. 3, a partial cut view of the pre-combustion chamber assembly 60 is illustrated. The pre-combustion chamber lower part 80 includes a pre-combustion chamber tip 81 which is generally cylindrical and which may at least partially protrude into the main combustion chamber 26 through a bore 120 provided in the cylinder head 24.

The pre-combustion chamber upper part 70 and the pre-combustion chamber lower part 80 each define at least a portion of a pre-combustion chamber 68. Particularly, the pre-combustion chamber lower part 80 defines at least a portion of the pre-combustion chamber 68, and the pre-combustion chamber upper part 70 defines a remaining portion of the pre-combustion chamber 68. Thus, the pre-combustion chamber upper and lower parts 70, 80 together define the pre-combustion chamber 68. The electrode end of the spark plug 62 may at least partially protrude into the pre-combustion chamber 68 (see Fig. 2).

The pre-combustion chamber tip 81 having a substantially dome-like shape may include a plurality of spaced apart, radially oriented orifices 83. The plurality of orifices 83 may fluidly connect the pre-combustion chamber 68 to the main combustion chamber 26. The plurality of orifices 83 may be configured to direct burning fuel, for example, expanding gases from the pre-combustion chamber 68 in a predetermined pattern into the main combustion chamber 26 and to direct an air/fuel mixture from the main combustion chamber 26 into the pre-combustion chamber 68.

As further shown in Fig. 3, the pre-combustion chamber upper part 70 includes a pre-combustion chamber upper part body 72 and a fuel supply channel 74 fluidly connected to the pre-combustion chamber 68 and to a fuel system (not explicitly shown in the drawings) including, for example, a fuel reservoir, fuel pumps, control valves, and some further elements configured to provide fuel to the pre-combustion chamber 68. In some embodiments, the pre-combustion chamber upper part 70 may include more than one fuel supply channel 74. The fuel supply channel 74 is configured to receive, for example, gaseous fuel and supply the fuel into the pre-combustion chamber 68. The fuel supply channel 74 may be further configured to accommodate a control valve (not shown in Fig. 3) at a control valve receiving portion 75 for controlling the supply of fuel into the pre-combustion chamber 68.

The pre-combustion chamber upper part 70 is mountable to the pre-combustion chamber lower part 80 via, for instance, welding, soldering, screwing, bolting, form-fitting, or any other suitable fixing means. The pre-combustion chamber lower part 80 includes a pre-combustion chamber lower part body 82 and an annular protrusion 84 configured to engage and match with an annular recess 73 of the pre-combustion chamber upper part 70. For example, the pre-combustion chamber upper and lower parts 70, 80 are mounted to one another via a thread (not shown in the drawings) provided on an inner circumferential surface of the annular protrusion 84 and on an outer circumferential surface of the annular recess 73, respectively. In some embodiments, the pre-combustion chamber upper and lower parts 70, 80 are mounted to one another by welding, particularly via a laser beam weld extending about the outer circumference of the pre-combustion chamber upper and lower parts 70, 80.

As further illustrated in Fig. 3, the pre-combustion chamber upper part body 72 includes at least one fuel passage 76 provided at an interface between the pre-combustion chamber upper part 70 and the pre-combustion chamber lower part 80. In the embodiment shown in Fig. 3, the at least one fuel passage 76 is formed in the pre-combustion chamber upper part body 72. As illustrated, the pre-combustion chamber upper part body 72 includes in total sixteen fuel passages 76 equally spaced apart about the longitudinal axis 63. However, in some embodiments, the pre-combustion chamber upper part body 72 may include more or less than sixteen fuel passages 76 that may include different sizes. In some embodiments, the at least one fuel passage 76 may be unequally spaced apart about the longitudinal axis 63 for preventing direct blowing the fuel onto the sparking end of the spark plug. In some embodiments, instead of being formed in the pre-combustion upper part body 72, the at least one fuel passage 76 may be at least partially formed in the pre-combustion chamber lower part body 82.

The pre-combustion chamber upper part body 72 further defines and includes a fuel accumulating chamber 78 circumferentially extending about the longitudinal axis 63 and fluidly connected to the fuel supply channel 74 and the at least one fuel passage 76. The fuel accumulating chamber 78 is disposed at the interface between the pre-combustion chamber upper part 70 and the pre-combustion chamber lower part 80 radially outward of the pre-combustion chamber 68.

As further illustrated in Fig. 3, a seal ring 90 is disposed adjacent the fuel accumulating chamber 78 and configured to seal the fuel accumulating chamber 78 against the environment, particularly against the cooling fluid passage 34 (see Fig. 2). The seal ring 90 is radially outward of the fuel accumulating chamber 78 with respect to the longitudinal axis 63. In some embodiments where the pre-combustion chamber upper and lower parts 70, 80 are welded to one another, a seal ring 90 may not be provided.

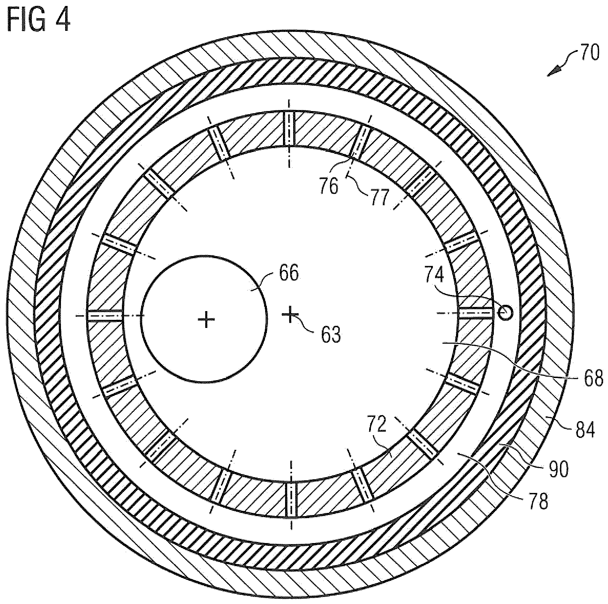

Referring to Fig. 4, a cut view of the pre-combustion chamber upper part 70 taken along line IV - IV of Fig. 3 is shown. As illustrated in Fig. 4, the fuel passages 76 are equally spaced apart and radially extend with respect to the longitudinal axis 63. Particularly, the fuel passages 76 each lie in a plane perpendicular to the longitudinal axis 63 and each extend along a fuel passage axis 77, respectively, radially extending with respect to the longitudinal axis 63.

The fuel passages 76 may include a circular cross-section. However, in some embodiments, the fuel passages 76 may include a semicircular cross-section, an oval cross-section, a rectangular cross-section, or any other cross-sectional shape suitably for fluidly connecting the fuel accumulating chamber 78 to the pre-combustion chamber 68. For example, the fuel passages 76 may be drilled bores. In some embodiments, the fuel passages 76 may be milled at the interface between the pre-combustion chamber upper and/or lower parts 70, 80.

The fuel passages 76 may together include a total cross-sectional area ranging from about 20 % to about 100 % of a cross-sectional area of the fuel supply channel 74. For example, the fuel supply channel 74 may include a diameter ranging from, for example, about 1 mm to about 5 mm resulting in a cross-sectional area ranging from, for instance, about 0.75 mm² to about 20 mm². The fuel passages 76 may include a total cross-sectional area ranging from about 0.1 mm² to about 20 mm².

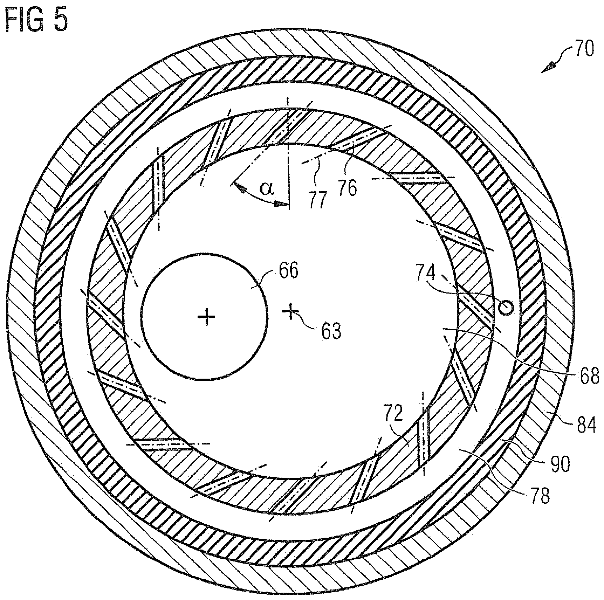

Referring to Fig. 5, a further cut view of the pre-combustion chamber upper part 70 similar to the cut view of Fig. 4 is illustrated. As shown in Fig. 5, the fuel passages 76 each extend in a skew manner with respect to the longitudinal axis 63. For example, the fuel passage axes 77 each extend at an angle α with respect to a radial direction 79. The angle α between a fuel passage axis 77 and the radial direction 79 may be in a range from about 0° to about 60°.

The skew extending fuel passages 76 may be configured to supply fuel into the pre-combustion chamber 68, thereby imparting a swirl into the combustion mixture within the pre-combustion chamber 68. As shown, the swirl imparted by the skew extending fuel passages 76 may be in a clockwise direction. However, in some embodiments, the swirl may be in a counter-clockwise direction. The swirl imparted by the skew extending fuel passages 76 may support mixing of the injected fuel with the air/fuel mixture already present within the pre-combustion chamber 68.

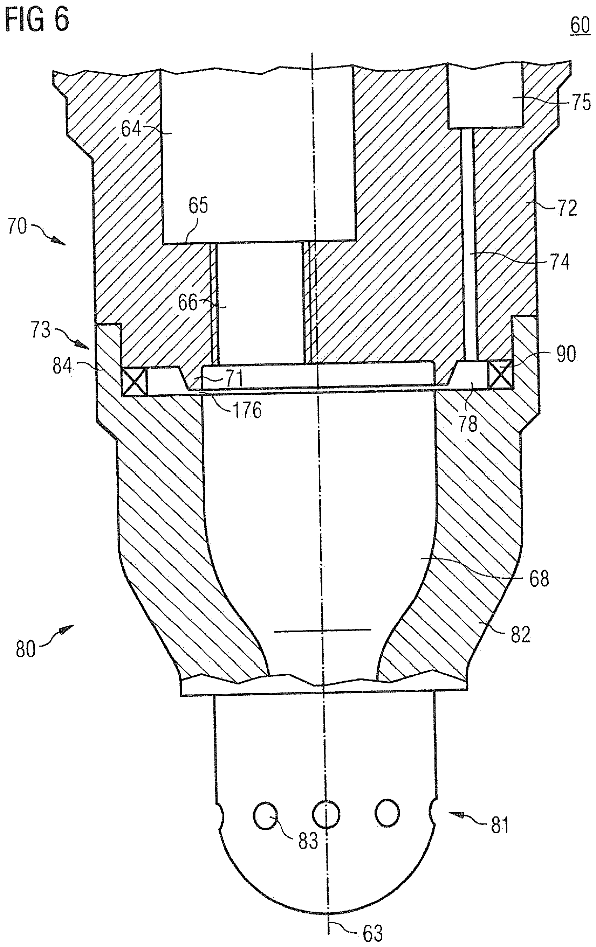

Fig. 6 illustrates a partial cut view of the pre-combustion chamber assembly 60 similar to Fig. 3, such that same parts are provided with same reference numerals in Figs. 3 and 6. The pre-combustion chamber assembly 60 of Fig. 6 differs from the pre-combustion chamber assembly 60 of Fig. 3 in that the at least one fuel passgge 76 is an annular fuel gap 176 disposed at the interface between the pre-combustion chamber upper part 70 and the pre-combustion chamber lower part 80. The annular fuel gap 176 circumferentially extends about the longitudinal axis 63 and fluidly connects the fuel accumulating chamber 78 to the pre-combustion chamber 68.

The annular fuel gap 176 may include a thickness ranging from about 0.01 mm to about 0.5 mm. Specifically, the annular fuel gap 176 may be defined by a clearance between the pre-combustion chamber lower part body 82 and an annular protrusion 71 of the pre-combustion chamber upper part body 72. As illustrated in Fig. 6, the annular protrusion 71 separates the fuel accumulating chamber 78 from the pre-combustion chamber 68, while providing the fuel gap 176.

It should be noted that the fuel passages 76 and the fuel gap 176 may be completely formed in one of the pre-combustion chamber upper part body 72 and the pre-combustion chamber lower part body 82. However, in some embodiments, the fuel passages 76 and the fuel gap 176 may be at least partially formed in both the pre-combustion chamber upper part body 72 and the pre-combustion chamber lower part body 82, respectively.

### Industrial Applicability

In the following, operation of the internal combustion engine 10 comprising an exemplary disclosed pre-combustion chamber assembly is described with respect to the drawings.

During operation of the internal combustion engine 10, especially during a compression stroke of one of the cylinders 14, at least some amount of an air/fuel mixture provided to the cylinder 14 through the engine valves 30 during an intake stroke is forced into the pre-combustion chamber 68 through the orifices 83. Then, for enriching the air/fuel mixture within the pre-combustion chamber 68 in order to support the ignition event, at least some amount of fuel, such as gaseous fuel, is provided into the pre-combustion chamber 68 via the fuel supply channel 74, the fuel accumulating chamber 78, and the fuel passages 76 or the fuel gap 176, respectively. The fuel supplied into the pre-combustion chamber 68 via the fuel supply channel 74, the fuel accumulating chamber 78, and the fuel passages 76 or the fuel gap 176, respectively, may be supplied at a piston position in the vicinity of its bottom dead center. In some embodiments, the fuel supplied into the pre-combustion chamber 68 via the fuel supply channel 74, the fuel accumulating chamber 78, and the fuel passages 76 or the fuel gap 176, respectively, may be supplied shortly before the ignition event is initiated.

Due to the small dimensions of the fuel passages 76 and the fuel gap 176, any flames generated within the pre-combustion chamber 68 during the ignition event may be prevented from flashing back into the fuel accumulating chamber 78 and, hence, into the fuel supply channel 74, as the small diameter fuel passages 76 and the thin annular fuel gap 176 may extinguish such flames.

As the fuel accumulating chamber 78 circumferentially extends about the longitudinal axis 63, the fuel amount may be uniformly provided into the pre-combustion chamber 68. Hence, the enriched portion of the air/fuel mixture within the pre-combustion chamber 68 may be substantially symmetrically distributed with respect to the longitudinal axis 63. Further, in case of fuel passages 76 extending in a skew manner with respect to the longitudinal axis 63 (see Fig. 5), the fuel injected into the pre-combustion chamber 68 may further impart a swirl into the air/fuel mixture within the pre-combustion chamber 68, which may lead to a better mixing of the air/fuel mixture and the injected fuel.

Generally, the fuel accumulating chamber 78 may be configured to equally distribute the fuel supplied via the fuel supply channel 74 about the circumference of the pre-combuston chamber 74 and, thus, to the fuel passages 76.

Although the preferred embodiments of this invention have been described herein, improvements and modifications may be incorporated without departing from the scope of the following claims.

## Claims

1. A pre-combustion chamber assembly (60) for an internal combustion engine (10), the pre-combustion chamber assembly (60) comprising:
a pre-combustion chamber lower part (80) defining at least a portion of a pre-combustion chamber (68);
a pre-combustion chamber upper part (70) defining a remaining portion of the pre-combustion chamber (68) and being mountable to the pre-combustion chamber lower part (80), the pre-combustion chamber upper part (70) including a fuel supply channel (74), the pre-combustion chamber lower part (80) and the pre-combustion chamber upper part (70) defining a longitudinal axis (63) of the pre-combustion chamber assembly (60);
a fuel accumulating chamber (78) disposed at an interface between the pre-combustion chamber upper part (70) and the pre-combustion chamber lower part (80) in at least one of the pre-combustion chamber upper part (70) and the pre-combustion chamber lower part (80) and at least partially circumferentially extending about the longitudinal axis (63), the fuel accumulating chamber (78) being fluidly connected to the fuel supply channel (74); and
at least one fuel passage (76; 176) disposed at an interface between the pre-combustion chamber upper part (70) and the pre-combustion chamber lower part (80) in at least one of the pre-combustion chamber upper part (70) and the pre-combustion chamber lower part (80) and being configured to fluidly connect the fuel accumulating chamber (78) to the pre-combustion chamber (68).

2. The pre-combustion chamber assembly (60) of claim 1, wherein the at least one fuel passage (76) extends along a fuel passage axis (77) lying substantially in a plane perpendicular to the longitudinal axis (63).

3. The pre-combustion chamber assembly (60) of any one of the preceding claims, wherein the at least one fuel passage (76) extends along a fuel passage axis (77) radially extending with respect to the longitudinal axis (63).

4. The pre-combustion chamber assembly (60) of any one of claims 1 and 2, wherein the at least one fuel passage (76) extends along a fuel passage axis (77) extending in a skew manner with respect to the longitudinal axis (63) for imparting a swirl into the pre-combustion chamber (68).

5. The pre-combustion chamber assembly (60) of claim 4, wherein an angle (α) between the fuel passage axis (77) and a radial direction (79) with respect to the longitudinal axis (63) is in a range from about 0° and about 60°.

6. The pre-combustion chamber assembly (60) of any one of the preceding claims, wherein the at least one fuel passage (76) includes a total cross-sectional area ranging from about 20 % to about 100 % of a cross-sectional area of the fuel supply channel (74).

7. The pre-combustion chamber assembly (60) of any one of the preceding claims, wherein the at least one fuel passage (76) includes a total cross-sectional area ranging from about 0.1 mm² to about 20 mm².

8. The pre-combustion chamber assembly (60) of any one of thre preceding claims, wherein the pre-combustion chamber upper part (70) and the pre-combustion chamber lower part (80) are mountable to one another via welding.

9. The pre-combustion chamber assembly (60) of claim 1, wherein the at least one fuel passage is an annular fuel gap (176) circumferentially extending about the longitudinal axis (63) at the interface between the pre-combustion chamber upper part (70) and the pre-combustion chamber lower part (80).

10. The pre-combustion chamber assembly (60) of claim 9, wherein the annular fuel gap (176) includes a thickness ranging from about 0.01 mm to about 0.5 mm.

11. The pre-combustion chamber assembly (60) of any one of the preceding claims, further comprising a seal ring (90) disposed adjacent the fuel accumulating chamber (78) and being configured to seal the fuel accumulating chamber (78) against the environment.

12. The pre-combustion chamber assembly (60) of claim 11, wherein the seal ring (90) is disposed radially outward with respect to the fuel accumulating chamber (78).

13. An internal combustion engine (10) comprising:
at least one cylinder (14) reciprocally receiving a piston (16), the at least one cylinder (14) and the piston (16) delimiting at least one main combustion chamber (26); and
at least one pre-combustion chamber assembly (60) according to any one of the preceding claims, the at least one pre-combustion chamber assembly (60) at least partially protruding into the at least one main combustion chamber (26).

## Patentansprüche

1. Vorbrennkammer-Einheit (60) für einen internen Verbrennungsmotor (10), die Vorbrennkammer-Einheit (60) umfassend:
einen unteren Teil der Vorbrennkammer (80), der wenigstens einen Abschnitt einer Vorbrennkammer (68) definiert;
einen oberen Teil der Vorbrennkammer (70), der einen restlichen Abschnitt der Vorbrennkammer (68) definiert und an den unteren Teil der Vorbrennkammer (80) installiert werden kann, wobei der obere Teil der Vorbrennkammer (70) einen Kraftstoffversorgungskanal (74) enthält, wobei der untere Teil der Vorbrennkammer (80) und der obere Teil der Vorbrennkammer (70) eine Längsachse (63) der Vorbrennkammer-Einheit (60) definieren;
eine Kraftstoff-Sammelkammer (78), die an einer Schnittfläche zwischen dem oberen Teil der Vorbrennkammer (70) und dem unteren Teil der Vorbrennkammer (80) in wenigstens einem des oberen Teils der Vorbrennkammer (70) und des unteren Teils der Vorbrennkammer (80) angeordnet ist und sich wenigstens teilweise umlaufend um die Längsachse (63) erstreckt, wobei die Kraftstoff-Sammelkammer (78) mit dem Kraftstoffversorgungskanal (74) in einer Flüssigkeitsverbindung verbunden ist; und
wenigstens einen Kraftstoffdurchgang (76; 176), der an einer Schnittfläche zwischen dem oberen Teil der Vorbrennkammer (70) und dem unteren Teil der Vorbrennkammer (80) in wenigstens einem des oberen Teils der Vorbrennkammer (70) und des unteren Teils der Vorbrennkammer (80) angeordnet ist und derart konfiguriert ist, um die Kraftstoff-Sammelkammer (78) mit der Vorbrennkammer (68) in einer Flüssigkeitsverbindung zu verbinden.

2. Vorbrennkammer-Einheit (60) nach Anspruch 1, wobei sich der wenigstens eine Kraftstoffdurchgang (76) entlang einer Kraftstoffdurchgangsachse (77) erstreckt, die im Wesentlichen in einer Ebene senkrecht zu der Längsachse (63) liegt.

3. Vorbrennkammer-Einheit (60) nach einem der vorstehenden Ansprüche, wobei sich der wenigstens eine Kraftstoffdurchgang (76) entlang einer Kraftstoffdurchgangsachse (77) erstreckt, die sich radial bezüglich der Längsachse (63) erstreckt.

4. Vorbrennkammer-Einheit (60) nach einem der Ansprüche 1 und 2, wobei sich der wenigstens eine Kraftstoffdurchgang (76) entlang einer Kraftstoffdurchgangsachse (77) erstreckt, die sich auf versetzte Weise bezüglich der Längsachse (63) erstreckt, um der Vorbrennkammer-Einheit (68) einen Versatz zu verleihen.

5. Vorbrennkammer-Einheit (60) nach Anspruch 4, wobei ein Winkel (α) zwischen der Kraftstoffdurchgangsachse (77) und einer radialen Richtung (79) bezüglich der Längsachse (63) in einem Bereich von etwa 0° und etwa 60° liegt.

6. Vorbrennkammer-Einheit (60) nach einem der vorstehenden Ansprüche, wobei der wenigstens eine Kraftstoffdurchgang (76) einen Querschnitts-Gesamtbereich im Bereich von etwa 20 % bis etwa 100 % eines Querschnittsbereichs des Kraftstoffversorgungskanals (74) aufweist.

7. Vorbrennkammer-Einheit (60) nach einem der vorstehenden Ansprüche, wobei der wenigstens eine Kraftstoffdurchgang (76) einen Querschnitts-Gesamtbereich im Bereich von etwa 0,1 mm² bis etwa 20 mm² aufweist.

8. Vorbrennkammer-Einheit (60) nach einem der vorstehenden Ansprüche, wobei der obere Teil der Vorbrennkammer (70) und der untere Teil der Vorbrennkammer (80) jeweils durch Schweißen miteinander befestigt werden können.

9. Vorbrennkammer-Einheit (60) nach Anspruch 1, wobei der wenigstens eine Kraftstoffdurchgang ein ringförmiger Kraftstoffspalt (176) ist, der sich umlaufend um die Längsachse (63) an der Schnittstelle zwischen dem oberen Teil der Vorbrennkammer (70) und dem unteren Teil der der Vorbrennkammer (80) erstreckt.

10. Vorbrennkammer-Einheit (60) nach Anspruch 9, wobei der ringförmige Kraftstoffspalt (176) eine Dicke aufweist, die im Bereich von etwa 0,01 mm bis etwa 0,5 mm liegt.

11. Vorbrennkammer-Einheit (60) nach einem der vorstehenden Ansprüche, weiter umfassend einen Dichtungsring (90), der benachbart zu der Kraftstoff-Sammelkammer (78) angeordnet ist und derart konfiguriert ist, um die Kraftstoff-Sammelkammer (78) von der Umgebung abzudichten.

12. Vorbrennkammer-Einheit (60) nach Anspruch 11, wobei der Dichtungsring (90) radial nach Außen bezüglich der Kraftstoff-Sammelkammer (78) angeordnet ist.

13. Verbrennungsmotor (10), umfassend:
wenigstens einen Zylinder (14), der einen Kolben (16) wechselseitig aufnimmt, wobei der wenigstens eine Zylinder (14) und der Kolben (16) wenigstens eine Hauptbrennkammer (26) abgrenzen; und
wenigstens eine Vorbrennkammer-Einheit (60) nach einem der vorstehenden Ansprüche, wobei die wenigstens eine Vorbrennkammer-Einheit (60) zumindest teilweise in die wenigstens eine Hauptbrennkammer (26) hineinragt.

## Revendications

1. Ensemble chambre de précombustion (60) pour un moteur à combustion interne (10), l'ensemble chambre de précombustion (60) comprenant :
une partie inférieure de chambre de précombustion (80) définissant au moins une partie d'une chambre de précombustion (68) ;
une partie supérieure de chambre de précombustion (70) définissant une partie restante de la chambre de précombustion (68) et étant montable sur la partie inférieure de chambre de précombustion (80), la partie supérieure de chambre de précombustion (70) comprenant un canal d'alimentation en carburant (74), la partie inférieure de chambre de précombustion (80) et la partie supérieure de chambre de précombustion (70) définissant un axe longitudinal (63) de l'ensemble chambre de précombustion (60) ;
une chambre d'accumulation de carburant (78) disposée à une interface entre la partie supérieure de chambre de précombustion (70) et la partie inférieure de chambre de précombustion (80) dans au moins une de la partie supérieure de chambre de précombustion (70) et de la partie inférieure de chambre de précombustion (80) et s'étendant de manière au moins partiellement circonférentielle autour de l'axe longitudinal (63), la chambre d'accumulation de carburant (78) étant connectée fluidiquement au canal d'alimentation en carburant (74) ; et
au moins un passage de carburant (76 ; 176) disposé à une interface entre la partie supérieure de chambre de précombustion (70) et la partie inférieure de chambre de précombustion (80) dans au moins une de la partie supérieure de chambre de précombustion (70) et de la partie inférieure de chambre de précombustion (80) et étant configuré pour connecter fluidiquement la chambre d'accumulation de carburant (78) à la chambre de précombustion (68).

2. Ensemble chambre de précombustion (60) selon la revendication 1, dans lequel l'au moins un passage de carburant (76) s'étend le long d'un axe de passage de carburant (77) se trouvant sensiblement dans un plan perpendiculaire à l'axe longitudinal (63).

3. Ensemble chambre de précombustion (60) selon l'une quelconque des revendications précédentes, dans lequel l'au moins un passage de carburant (76) s'étend le long d'un axe de passage de carburant (77) s'étendant radialement par rapport à l'axe longitudinal (63).

4. Ensemble chambre de précombustion (60) selon l'une quelconque des revendications 1 et 2, dans lequel l'au moins un passage de carburant (76) s'étend le long d'un axe de passage de carburant (77) s'étendant d'une manière oblique par rapport à l'axe longitudinal (63) pour créer un tourbillon dans la chambre de précombustion (68).

5. Ensemble chambre de précombustion (60) selon la revendication 4, dans lequel un angle (α) entre l'axe de passage de carburant (77) et une direction radiale (79) par rapport à l'axe longitudinal (63) se situe dans une plage d'environ 0° à environ 60°.

6. Ensemble chambre de précombustion (60) selon l'une quelconque des revendications précédentes, dans lequel l'au moins un passage de carburant (76) comprend une section transversale totale allant d'environ 20 % à environ 100 % d'une section transversale du canal d'alimentation en carburant (74).

7. Ensemble chambre de précombustion (60) selon l'une quelconque des revendications précédentes, dans lequel l'au moins un passage de carburant (76) comprend une section transversale totale d'environ 0,1 mm² à environ 20 mm².

8. Ensemble chambre de précombustion (60) selon l'une quelconque des revendications précédentes, dans lequel la partie supérieure de chambre de précombustion (70) et la partie inférieure de chambre de précombustion (80) sont montables l'une sur l'autre par soudage.

9. Ensemble chambre de précombustion (60) selon la revendication 1, dans lequel l'au moins un passage de carburant est un espace de carburant annulaire (176) s'étendant de manière circonférentielle autour de l'axe longitudinal (63) à l'interface entre la partie supérieure de chambre de précombustion (70) et la partie inférieure de chambre de précombustion (80).

10. Ensemble chambre de précombustion (60) selon la revendication 9, dans lequel l'espace de carburant annulaire (176) comprend une épaisseur allant d'environ 0,01 mm à environ 0,5 mm.

11. Ensemble chambre de précombustion (60) selon l'une quelconque des revendications précédentes, comprenant en outre une bague d'étanchéité (90) disposée de manière adjacente à la chambre d'accumulation de carburant (78) et étant configurée pour étanchéifier la chambre d'accumulation de carburant (78) contre l'environnement.

12. Ensemble chambre de précombustion (60) selon la revendication 11, dans lequel la bague d'étanchéité (90) est disposée radialement vers l'extérieur par rapport à la chambre d'accumulation de carburant (78).

13. Moteur à combustion interne (10) comprenant :
au moins un cylindre (14) recevant réciproquement un piston (16), l'au moins un cylindre (14) et le piston (16) délimitant au moins une chambre de combustion principale (26) ; et
au moins un ensemble chambre de combustion (60) selon l'une quelconque des revendications précédentes, l'au moins un ensemble chambre de précombustion (60) faisant saillie au moins partiellement dans l'au moins une chambre de combustion principale (26).
